# EUROPÄISCHE PATENTSCHRIFT

(11) **EP 1 381 782 B1**
(45) Veröffentlichungstag und Bekanntmachung des Hinweises auf die Patenterteilung: **16.11.2005**
(21) Anmeldenummer: 02737805.8
(22) Anmeldetag: 18.04.2002
(51) Int. Cl.: F16B 5/06, E04B 1/61, E04B 1/38

(54) **BESCHLAG ZUM VERBINDEN VON ZWEI BAUTEILEN**
FITTING FOR CONNECTING TWO COMPONENTS
ARMATURE SERVANT A RELIER DEUX ELEMENTS

(30) Priorität: 18.04.2001 DE 10119038
(43) Veröffentlichungstag der Anmeldung: 21.01.2004
(73) Patentinhaber: Knapp, Friedrich, 85591 Vaterstetten (DE)
(72) Erfinder: Knapp, Friedrich, 85591 Vaterstetten (DE)
(74) Vertreter: Müller, Thomas
(86) Internationale Anmeldenummer: PCT/DE2002/001439
(87) Internationale Veröffentlichungsnummer: WO 2002/084129

(56) Entgegenhaltungen:
- DE-U- 1 882 175
- GB-A- 1 067 187
- US-A- 4 189 796
- US-A- 5 284 311

## Beschreibung

Die Erfindung betrifft einen Beschlag zum Verbinden zweier Bauteile, insbesondere von Bauteilen mit großen Abmessungen, die im Bau- und Holzbaugewerbe bei der Errichtung von Häusern eingesetzt werden. Der Beschlag kann jedoch auch für die sichere und rationelle Verbindung von Bauteilen in anderen Einsatzfällen verwendet werden. Aufgrund der besonders einfachen Konstruktion ist der Beschlag in unterschiedlichen Größen leicht und kostengünstig herstellbar.

Der Beschlag besteht aus zwei Beschlaghälften aus Metall, die jeweils an einem der zu verbindenden Bauteile befestigt werden und miteinander in Eingriff bringbare Elemente aufweisen, die die Verbindung der Bauteile beim Zusammenfügen bewirken. Derartige Beschläge sind dem Fachmann aus dem Stand der Technik, wie z. B. aus dem Dokument US 5,284,311 hinreichend bekannt und sollen daher nicht näher erläutert werden.

Für spezielle Anwendungsfälle ist es erforderlich, daß die Verbindung auch arretiert werden kann, d. h., daß ein Lösen der Verbindung entgegengesetzt zur Fügebewegung nicht möglich ist. Eine typische Anwendung ist die Errichtung von Gebäuden in sturm- und in erdbebengefährdeten Gebieten, wenn tragende Balken zuverlässig miteinander zu verbinden sind. Die Verbindungsstellen müssen Eigenschaften aufweisen, die bei herkömmlichen Gebäuden nicht zwingend notwendig sind. So muß die Verbindungsstelle Kräfte aufnehmen, die entgegengesetzt zur Schwerkraft wirken, wenn z. B. ein Wirbelsturm auf ein Dach einwirkt. Weiterhin ist bei vorstehend genannten Anwendungsfällen von besonderer Bedeutung, daß die Verbindungsstellen eine vorbestimmte Elastizität aufweisen..

Die aus dem Stand der Technik bekannten Verbindungskonstruktionen sind mehr oder weniger gut geeignet, große Kräfte auch in besonderen Belastungsfällen aufzunehmen, wobei die fest und sicher verriegelbaren Konstruktionen häufig starr und aufwendig sind. Ein besonderer Nachteil der herkömmlichen Verbindungskonstruktionen liegt darin, daß die Verriegelung als zusätzlicher Arbeitsschritt auszuführen ist.

Unter Berücksichtigung der vorstehend diskutierten Nachteile des Standes der Technik ist es die Aufgabe der Erfindung, eine Verbindungskonstruktion zum Verbinden von Bauteilen zu schaffen, die eine hohe Funktionssicherheit auch in besonderen Belastungsfällen in Verbindung mit einer selbsttätigen Verriegelung garantiert. Weiterhin soll die Verbindungskonstruktion einfach, robust und kostengünstig herstellbar sein.

Diese Aufgabe wird durch einen Beschlag nach Patentanspruch 1 gelöst.

Erfindungsgemäß wird ein Beschlag zum Verbinden zweier Bauteile geschaffen, der aus zwei Beschlaghälften besteht, die jeweils an einem der zu verbindenden Bauteile befestigt werden und miteinander in Eingriff bringbare Elemente aufweisen, die nach dem Fügeschluß die unlösbare Verbindung der Bauteile bewirken. Die Beschlaghälften sind plattenförmig ausgebildet. Die gegenüberliegenden Endabschnitte weisen je einen Schlitz auf. Ein Endabschnitt ist um 180° umgebogen, der andere Endabschnitt ist gekröpft. Am Schlitzende, d. h. zur Plattenmitte hin, ist eine Ausnehmung, z. B. eine Senkung zur Aufnahme eines Schraubenkopfes vorgesehen. Der um 180° umgebogene Endabschnitt weist in dem, der Ausnehmung gegenüberliegenden Materialabschnitt eine Befestigungsbohrung auf. Zwischen den Endabschnitten der Beschlaghälfte ist mindestens ein weiteres Befestigungsloch vorgesehen. Beide Beschlaghälften werden auf die zu verbindenden Teile aufgeschraubt, wobei je eine Befestigungsschraube an den Schlitzenden vorgesehen ist, da dort große Hebelkräfte entstehen können. Die Anzahl und die Größe der Schrauben werden fachmännisch bestimmt.

Im Biegeraum des Endabschnitts nur einer der Beschlaghälften ist eine plattenförmige Sperrklappe angeordnet. Die Sperrklappe weist eine erste Halteausnehmung auf, um die Sperrklappe im Biegeraum mittels der Befestigungsschraube zu halten. In Gegenüberlage der ersten Halteausnehmung in Richtung der Längsachse der Sperrklappe ist eine zweite, größere Halteausnehmung vorgesehen. Zwischen der ersten und der zweiten Halteausnehmung ist eine Schwenkpunktauflage ausgebildet. Die Sperrklappe ist so dimensioniert, daß beim Einstecken des gekröpften Endabschnitts der anderen Beschlaghälfte in den Biegeraum die Sperrklappe in der Querachse verkippt wird und dabei die zweite Halteausnehmung der Sperrklappe den Kopf einer die andere Beschlaghälfte befestigenden Schraube umfaßt, die in dem Befestigungsloch angeordnet ist.

Der erfindungsgemäße Beschlag ist einfach herstell- und montierbar. Der Beschlag kann auf Grund der eingesetzten Befestigungsmittel relativ große Kräfte aufnehmen. Besonders vorteilhaft ist, daß die Verriegelung mittels der während der Fügebewegung kippenden Sperrklappe selbsttätig erfolgt.

Nach Anspruch 2 sind an den Schenkelenden der Beschlaghälfte gleichgerichtete Abschrägungen vorgesehen, die beim gegengleichen Ineinandergreifen der Beschlaghälften das Zusammenfügen erleichtern, wobei die Abschrägung des kurzen Schenkels zum Biegeinnenraum der Beschlaghälfte gerichtet ist.

Nach Anspruch 3 ist die Sperrklappe permanentmagnetisch. Dadurch nimmt sie immer eine für das Zusammenfügen funktionell günstige Montageposition ein.

Die Erfindung wird nachstehend unter Bezugnahme auf besonders vorteilhafte Ausgestaltungen, die in den beigefügten Zeichnungen schematisch dargestellt sind, näher erläutert:
- Fig. 1: zeigt eine Beschlaghälfte.
- Fig. 2: zeigt eine Sperrklappe.
- Fig. 3: zeigt die Anordnung der Sperrklappe.
- Fig. 4A, 48, 4C: zeigen das Funktionsprinzip der Verbindungsmittel.
- Fig. 5: zeigt ein Ausführungsbeispiel der vertieften Anordnung einer Beschlaghälfte.

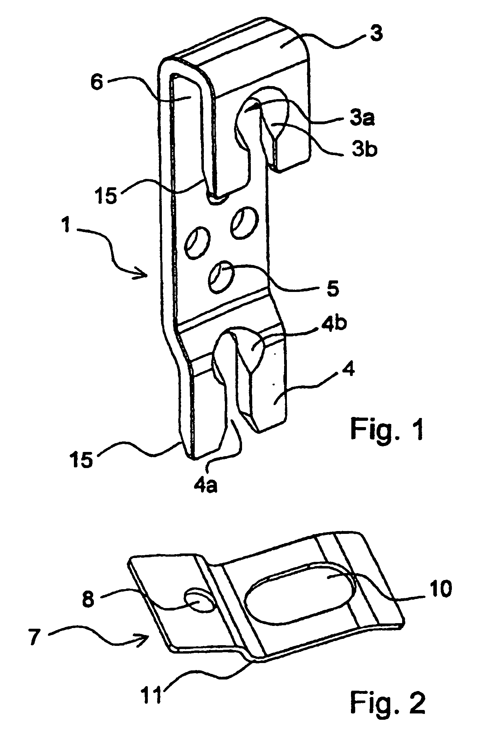

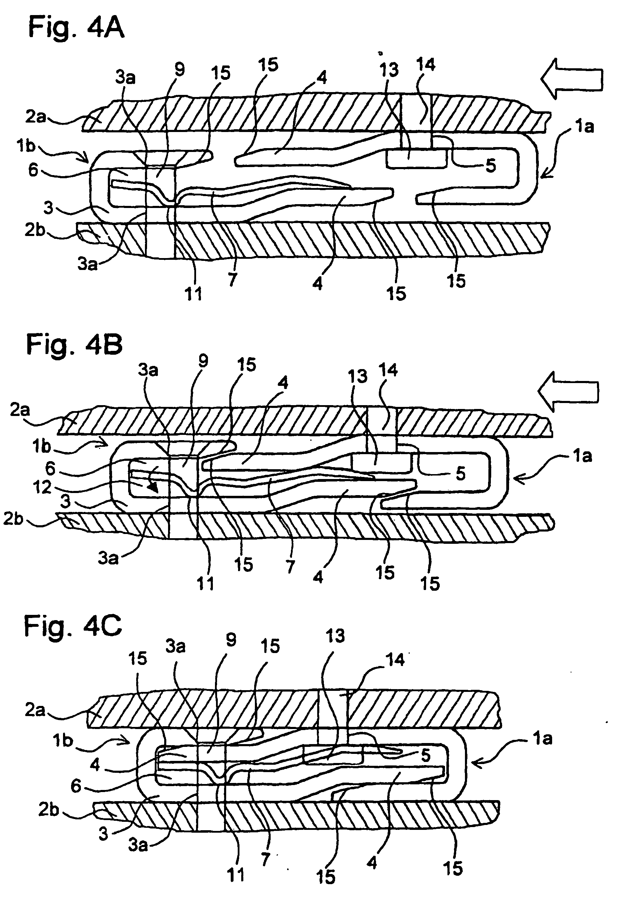

Die Fig. 1 zeigt eine der beiden formgleichen, plattenförmigen Beschlaghälften 1 a, 1b aus Metall zum formschlüssigen, unlösbaren Verbinden von jeweils zwei Bauteilen 2a, 2b (in Fig. 4 gezeigt). Die Beschlaghälfte weist einen im Winkel von 180° umgebogenen Endabschnitt 3 mit einem durch beide Schenkel hindurchgehenden Befestigungsloch 3a auf. In Gegenüberlage des Endabschnitts 3 ist ein gekröpfter Endabschnitt 4 mit einem Längsschlitz 4a mit geschrägtem Auslauf ausgebildet. Zwischen den Endabschnitten 3, 4 der Beschlaghälfte ist von dem Befestigungsloch 3a beabstandet mindestens ein weiteres Befestigungsloch 5 vorgesehen. Der umgebogene Endabschnitt 3 der Beschlaghälfte bildet einen Biegeinnenraum 6 aus. Zur Aufnahme des Kopfes je einer Befestigungsschraube sind die Senkungen 3b und 4b vorgesehen. Die Schäfte der Befestigungsschrauben, deren Köpfe von den Senkungen 3b und 4b aufgenommen werden, bewirken in Wirkverbindung mit den Schlitzen eine sehr stabile Konstruktion gegen Kraftangriff aus jeder Richtung.

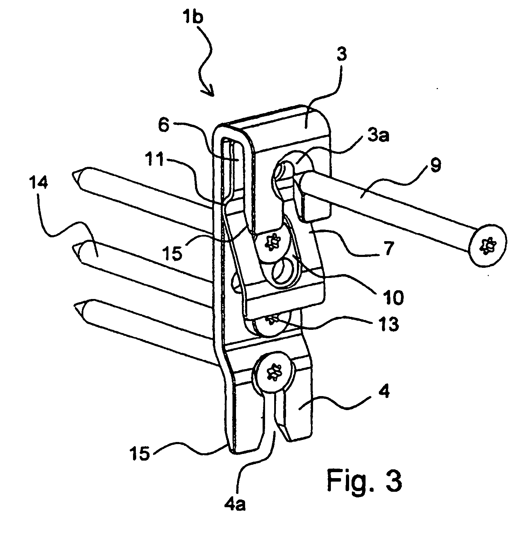

Die Fig. 2 zeigt eine plattenförmige Sperrklappe 7 mit einer Halteausnehmung 8 für eine Befestigungsschraube 9 (in Fig. 3 gezeigt). In Gegenüberlage der Halteausnehmung 8 in Richtung der Längsachse der Sperrklappe 7 ist eine zweite, größere Halteausnehmung 10 erzeugt. Zwischen den Halteausnehmungen 8 und 10 ist eine Schwenkpunktauflage 11 in einer zum Befestigungsloch 8 hin versetzten Querachse der Sperrklappe 7 ausgebildet. In diesem Beispiel wird die Schwenkpunktauflage 11 durch eine Krümmung gebildet. Es ist dem Fachmann klar, daß die Schwenkpunktauflage auch durch andere Maßnahmen, wie z. B. eine Materialverdickung, erzeugt werden kann.

Die Fig. 3 zeigt die Anordnung der Sperrklappe 7 im Biegeinnenraum 6 der Beschlaghälfte 1b beim Einfügen der Befestigungsschraube 9 in die Halteausnehmung 8 der Sperrklappe 7, während weitere Befestigungsschrauben 14 für die nachfolgende Befestigung bereits bis zum Schraubenkopf 13 in die Befestigungslöcher 5 der Beschlaghälfte 1 b eingefügt sind.

Die Figuren 4A, 4B und 4C zeigen das Funktionsprinzip der Verbindungsmittel. Wie Fig. 4A zeigt, sind die Beschlaghälften 1 a, 1b jeweils an den Bauteilen 2a, 2b durch Befestigungsschrauben (14, 9) fest angeordnet. Zur Herstellung der formschlüssigen Verbindung zwischen den Beschlaghälften 1a, 1b werden die Bauteile 2a, 2b zueinander in Längsrichtung verschoben, bis die Beschlaghälften gegengleich ineinandergreifen, wie in Fig. 4B gezeigt ist. Beim weiteren Einführen des gekröpften Endabschnitts 4 der Beschlaghälfte 1 a in den Biegeraum 6 der Beschlaghälfte 1 b mit der Sperrklappe 7 klappt die Sperrklappe in Pfeilrichtung 12 in der Schwenkpunktauflage 11 um die Querachse um und umfaßt mit der zweiten Halteausnehmung 10 (siehe Fig. 2) den Schraubenkopf 13 einer Befestigungsschraube 14 zur Befestigung der anderen Beschlaghälfte 1 a. Dieser Verbindungszustand ist als Schließlage in Fig. 4C gezeigt und verhindert zuverlässig ein Lösen der Verbindung in allen Richtungen.

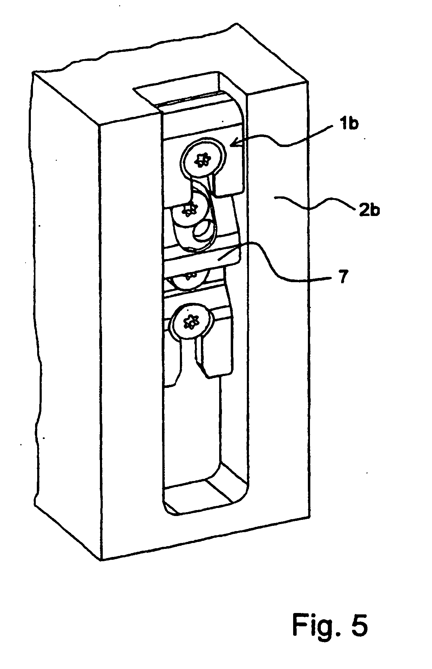

Die Fig. 5 zeigt ein Ausführungsbeispiel der vertieften Befestigung der Beschlaghälfte 1b mit angeordneter Sperrklappe 7 im Bauteil 2b, wobei die andere Beschlaghälfte 1a am Bauteil vorspringend befestigt sein muß. Diese Anschlußart von Bauteilen ist mit einer Zapfung vergleichbar und gewährleistet die optische Verdeckung der Verbindungsmittel.

## Patentansprüche

1. Beschlag aus zwei Beschlaghälften (**1a, 1b**) zum formschlüssigen Verbinden zweier Bauteile (**2a, 2b**), wobei je eine der Beschlaghälften (**1a, 1b**)
- jeweils an einem der Bauteile (**2a, 2b**) befestigt wird und
- miteinander in Eingriff bringbare Elemente aufweist, die die Fügeverbindung der Bauteile (**2a, 2b**) bewirken, **dadurch gekennzeichnet, daß** die Beschlaghälften (**1a, 1b**)
- plattenförmig ausgebildet sind,
- einen im Winkel von 180° umgebogenen und längsgeschlitzten Endabschnitt (**3**) mit einem Befestigungsloch (**3a**) aufweisen,
- einen gekröpften Endabschnitt **(4)** mit einem Längsschlitz **(4a)** aufweisen,
wobei an jedem Schlitzende eine Ausnehmung **(3b, 4b)** zu Aufnahme eines Schraubenkopfes vorgesehen ist,
- zwischen den Endabschnitten **(3, 4)** mindestens ein weiteres Befestigungsloch **(5)** vorgesehen ist,
- im Biegeinnenraum **(6)** des Endabschnitts **(3)** der Beschlaghälfte **(1b)** eine plattenförmige Sperrklappe **(7)** angeordnet ist, die nachfolgende Merkmale aufweist:
- eine erste Halteausnehmung (8), um die Sperrklappe **(7)** im Biegeraum **(6)** mittels einer Befestigungsschraube **(9)** zu halten,
- eine zweite Halteausnehmung **(10)** und
- eine zwischen der ersten und der zweiten Halteausnehmung angeordnete Schwenkpunktauflage **(11)**, wobei
- die Sperrklappe (**7**) so dimensioniert ist, daß beim Einstecken des gekröpften Endabschnitts (**4**) der anderen Beschlaghälfte (**1a**) in den Biegeraum (**6**) der Beschlaghälfte **(1b)** die Sperrklappe **(7)** in Pfeilrichtung **(12)** verkippt wird und dabei die zweite Halteausnehmung (**10**) den Kopf (**13**) einer die andere Beschlaghälfte (**1a**) befestigenden Befestigungsschraube (**14**) umfaßt, die in dem Befestigungsloch (**5**) angeordnet ist.

2. Beschlag nach Anspruch 1, **dadurch gekennzeichnet, daß** an den Endabschnitten (**3**, **4**) der Beschlaghälfte gleichgerichtete Abschrägungen (**15**) ausgebildet sind, die beim gegengleichen Ineinandergreifen der Beschlaghälften das Zusammenfügen erleichtern, wobei die Abschrägungen (**15**) zu der Befestigungsseite der Beschlaghälfte weisen.

3. Beschlag nach Anspruch 1 oder 2, **dadurch gekennzeichnet, daß** die Sperrklappe **(7)** permanentmagnetisch ist.

## Claims

1. A fitment comprised of two fitment halves (**1a, 1b**) for the form-fitting joining of two structural parts (**2a**, **2b**), wherein one of the fitment halves (**1a, 1b**)
-- is attached to one of the structural parts (**2a**, **2b**) and
-- has elements that can be engaged with one another and that effect the joining of structural parts (**2a**, **2b**), is hereby **characterized in that** fitment halves (**1a, 1b**)
-- are configured in plate shape,
-- have one end segment (**3**) with an attachment hole (**3a**), and this end segment is bent back around an angle of 180° and is longitudinally slotted,
-- have another cropped end segment (**4**) with a longitudinal slot (**4a**), wherein a recess (3b, 4b) is provided at each slot end for the uptake of a screw head,
-- at least one other fastening hole (**5**) is provided between end segments (**3, 4**),
-- a plate-shaped retaining flap (**7**) is arranged in the inside space (**6**) created by the bend of end segment (**3**) of fitment half (**1b**), and this flap has the following features:
-- a first holding recess (**8**), in order to hold retaining flap (**7**) in bend space (**6**) by means of a fastening screw (**9**),
-- a second holding recess (**10**) and
-- a swivel-point support (**11**) arranged between the first and the second holding recess, whereby
-- the retaining flap (**7**) is dimensioned such that upon introducing the cropped end segment (**4**) of the other fitment half (**1a**) into the bend space (**6**) of fitment half (**1b**), the retaining flap (**7**) is tilted in the direction (**12**) of the arrow and thus the second holding recess (**10**) encloses the head (**13**) of a fastening screw (**14**), which fastens the other fitment half (**1a**), and this screw is arranged in fastening hole (**5**).

2. The fitment according to claim 1, further **characterized in that** parallelly aligned chamfers (**15**), which facilitate the coupling together when the fitment halves are oppositely and equally engaged with one another, are formed at the end segments (**3, 4**) of the fitment half, whereby the chamfers (**15**) point to the fastening side of the fitment half.

3. The fitment according to claim 1 or 2, further **characterized in that** the retaining flap (**7**) is a permanent magnet.

## Revendications

1. Armature composée de deux moitiés d'armature (1a, 1b) pour la liaison par ajustement géométrique de deux éléments constitutifs (2a, 2b), moyennant quoi respectivement une des moitiés d'armature (1a, 1b)
- est fixée respectivement à un des éléments constitutifs (2a, 2b), et
- comprend des éléments pouvant être mis en prise les uns aux autres, lesquels assurent la liaison par assemblage des éléments constitutifs (2a, 2b), **caractérisée en ce que** les moitiés d'armature (1a, 1b)
- sont configurées en forme de plaques,
- présentent un segment d'extrémité (3) fendu dans la longueur et incurvé à un angle de 180° avec un orifice de fixation (3a),
- comprennent un segment d'extrémité (4) contre-coudé avec une fente longitudinale (4a), moyennant quoi, à chaque extrémité de fente, un évidement (3b, 4b) est prévu pour le logement d'une tête de vis,
- entre les segments d'extrémité (3, 4), au moins un autre orifice de fixation (5) est prévu,
- dans l'espace interne formé par la courbure (6) du segment d'extrémité (3) des moitiés d'armature (1b) est placée une patte d'arrêt (7) en forme de plaque présentant les caractéristiques suivantes :
- un premier évidement de retenue (8) pour maintenir la patte d'arrêt (7) dans l'espace dé courbure (6) au moyen d'une vis de fixation (9),
- un second évidement de retenue (10) et
- un support de centre de gravité (11) disposé entre le premier évidement de retenue et le second évidement de retenue, étant précisé que
- la patte d'arrêt (7) est dimensionnée de telle sorte que, lors de l'introduction du segment d'extrémité (4) contre-coudé de l'autre moitié d'armature (1a) dans l'espace de courbure (6) des moitiés d'armature (1b), la patte d'arrêt (7) est basculée dans le sens de la flèche (12), et le second évidement de retenue (10) comprend la tête (13) d'une vis de fixation (14) fixant l'autre moitié d'armature (1a), cette vis de fixation étant disposée dans l'orifice de fixation (5).

2. Armature selon la revendication 1, **caractérisée en ce que** sur les segments d'extrémité (3, 4) des moitiés d'armature sont configurés des biseautages (15) orientés dans le même sens qui facilitent l'assemblage lors de la mise en prise diamétralement opposée des moitiés d'armature, les biseautages (15) étant dirigés vers la face de fixation des moitiés d'armature.

3. Armature selon la revendication 1 ou 2, **caractérisée en ce que** la patte d'arrêt (7) est un aimant permanent.
